(19) Europäisches Patentamt
European Patent Office
Office européen des brevets

(11) **EP 3 978 533 A1**

(12) **EUROPEAN PATENT APPLICATION**
published in accordance with Art. 153(4) EPC

(43) Date of publication:
**06.04.2022 Bulletin 2022/14**

(21) Application number: **20814096.2**

(22) Date of filing: **28.05.2020**

(51) International Patent Classification (IPC):
***C08B 11/00*** *(2006.01)* ***C08B 11/02*** *(2006.01)*
***C08B 11/08*** *(2006.01)* ***C08B 11/193*** *(2006.01)*
***D01F 2/28*** *(2006.01)*

(52) Cooperative Patent Classification (CPC):
**C08B 11/00; C08B 11/02; C08B 11/08; C08B 11/193; D01F 2/28**

(86) International application number:
**PCT/JP2020/021122**

(87) International publication number:
**WO 2020/241756 (03.12.2020 Gazette 2020/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.05.2019 JP 2019100523**

(71) Applicant: **Kao Corporation**
**Chuo-Ku**
**Tokyo 103-8210 (JP)**

(72) Inventors:
- **NAKAGAWA, Haruka**
  **Wakayama-shi, Wakayama (JP)**
- **YOSHIDA, Yutaka**
  **Wakayama-shi, Wakayama (JP)**
- **SHIBATA, Shotaro**
  **Wakayama-shi, Wakayama (JP)**
- **HANO, Rinako**
  **Wakayama-shi, Wakayama (JP)**
- **TANAKA, Ayako**
  **Wakayama-shi, Wakayama (JP)**

(74) Representative: **Hoffmann Eitle**
**Patent- und Rechtsanwälte PartmbB**
**Arabellastraße 30**
**81925 München (DE)**

(54) **METHOD FOR PRODUCING MODIFIED CELLULOSE**

(57) The present invention is a method for producing a modified cellulose including the following step A: step A: introducing a cellulose raw material with a substituent having 6 or more carbon atoms to a group in which a hydrogen atom is removed from a hydroxyl group of a cellulose backbone, in the presence of water and a surfactant. The present invention relates to a method for producing a modified cellulose having a high affinity of an organic solvent, a resin or the like, and a hydrophobic medium, using a reaction system with low environmental loads and with prospects of reduction in production costs.

EP 3 978 533 A1

## Description

### FIELD OF THE INVENTION

The present invention relates to a method for producing a modified cellulose and a modified cellulose.

### BACKGROUND OF THE INVENTION

Conventionally, plastic materials derived from limited resource petroleum have been widely used; however, in the recent years, techniques with less burdens on the environment have been spotlighted. In view of the technical background, materials using cellulose, which are biomass existing in nature in large amounts have been remarked.

For example, Patent Publication 1 discloses modified cellulose fibers having a specified substituent structure, in which a hydroxyl functional group is hydrophobically substituted with an ether bond, for the purpose of providing cellulose fibers capable of dispersing in an organic medium. In addition, Patent Publication 2 discloses as a method for producing a cellulose ether having a high degree of substitution and having a relatively smaller amount of a neutralized salt of an alkali metal contained by the use of an alkali having a relatively low equivalent number to a hydroxyl group, and being capable of collecting the medium to be reused, the method for producing a cellulose ether including adding an etherification agent (e) to a cellulose solution or dispersion (A) containing an organic alkali (a), an ionic solution (b), water (c), and a cellulose or a cellulose derivative (d) in specified amounts to carry out an etherification reaction.

Patent Publication 1: Japanese Patent Laid-Open No. 2017-53077
Patent Publication 2: Japanese Patent Laid-Open No. 2008-266625

### SUMMARY OF THE INVENTION

However, the modified cellulose fibers of Patent Publication 1 may need a large amount of an organic solvent or an organic base when modified, so that further improvements are in demand, from the viewpoint of reduction in environmental loads and production costs. In addition, in Patent Publication 2, no other than a method for introducing a short-chain substituent having from 1 to 3 carbon atoms or the like are specifically disclosed, so that the techniques of introducing an even longer chain substituent are in demand.

The present invention relates to a method for producing a modified cellulose having a high affinity of an organic solvent, a resin or the like, and a hydrophobic medium, using a reaction system with low environmental loads and with prospects of reduction in production costs.

The present invention relates to the following [1] to [7]:

[1] A method for producing a modified cellulose including the following step A:
step A: introducing a cellulose raw material with a substituent having 6 or more carbon atoms to a group in which a hydrogen atom is removed from a hydroxyl group of a cellulose backbone, in the presence of water and a surfactant.
[2] The method for production according to the above [1], further including the following step B:
step B: introducing a cellulose raw material with a substituent having 1 or more carbon atoms and 5 or less carbon atoms to a group in which a hydrogen atom is removed from a hydroxyl group of a cellulose backbone, in the presence of water and a surfactant.
[3] The method for production according to the above [2], wherein the step A and the step B are carried out concurrently.
[4] The method for production according to the above [2], wherein the step A is carried out after the step B, wherein the cellulose introduced with a substituent having 1 or more carbon atoms and 5 or less carbon atoms obtained in the step B is used as a cellulose raw material in the step A.
[5] A modified cellulose obtained by a method for producing a modified cellulose including the step A defined above.
[6] A resin composition containing a modified cellulose obtained by a method for production as defined in any one of the above [1] to [4] and a resin, wherein the modified cellulose is mixed with a resin.
[7] A molded article obtained by molding a resin composition as defined in the above [6].

### DETAILED DESCRIPTION OF THE INVENTION

According to the present invention, since modifications of a hydrophobic cellulose can be carried out with an aqueous medium, a method for producing a modified cellulose having a high affinity of an organic solvent, a resin or the like, and a hydrophobic medium using a reaction system with low environmental loads and with prospects of reduction in production costs can be provided.

The method for producing a modified cellulose of the present invention comprises a step A of introducing a cellulose raw material with a substituent having 6 or more carbon atoms to a group in which a hydrogen atom is removed from a hydroxyl group of a cellulose backbone, in the presence of water and a surfactant. In the method for producing a modified cellulose of the present invention, since the step of introducing a substituent is carried out in the presence of water and a surfactant, a large amount of an organic solvent or an organic base would not be necessitated as needed conventionally, so that the environmental loads are low, and that the production costs can be reduced.

Although the detailed mechanisms for the method for producing a modified cellulose of the present invention are not elucidated, they are assumed to be as follows. The compatibility between the cellulose raw materials and a hydrophobic substituent can be increased by adding a surfactant to the system, thereby improving the reaction selectivity of the substituent.

(step A)

The method for production of the present invention comprises the step A. In the step A, cellulose raw materials are reacted with a compound having a substituent having 6 or more carbon atoms as an etherification agent. Preferably, a mixture of cellulose raw materials and a base is reacted with a compound having a substituent having 6 or more carbon atoms as an etherification agent. Each of the components and the reaction conditions in the step A will be explained hereinbelow.

(Cellulose Raw Materials)

The cellulose raw materials used in the present invention include woody raw materials (needle-leaf trees and broad-leaf trees); grassy raw materials (plant raw materials of Gramineae, Malvaceae, and Fabaceae, non-woody raw materials of plants of Palmae); pulps (cotton linter pulps obtained from fibers surrounding the cottonseeds, etc.); papers (newspapers, corrugated cardboards, magazines, high-quality paper, etc.) and the like. Among them, woody raw materials and grassy raw materials are preferred, from the viewpoint of availability and costs. In the present invention, these raw materials may be directly used, or in a case where the step A is carried out after the step B described later or the like, a cellulose introduced with a substituent having 1 or more carbon atoms and 5 or less carbon atoms obtained in the step B may be used as cellulose raw materials.

The shapes of the cellulose raw materials are preferably in fibrous, powdery, spherical, chip-like, or flaky form, from the viewpoint of handling property. In addition, the shapes may be a mixture thereof.

The average fiber diameter of the cellulose raw materials is preferably 5 μm or more, and more preferably 7 μm or more, from the viewpoint of handling property and costs, and the average fiber diameter is preferably 500 μm or less, and more preferably 300 μm or less, from the same viewpoint.

The average fiber length of the cellulose raw materials is, but not particularly limited to, preferably 1,000 μm or more, and more preferably 1,500 μm or more, from the viewpoint of availability and costs, and the average fiber length is preferably 5,000 μm or less, and more preferably 3,000 μm or less, from the same viewpoint. The average fiber diameter and the average fiber length of the cellulose raw materials can be measured in accordance with the methods described in Examples set forth below.

(Water)

Water is considered to have a role as a medium in the step A.

(Other Media)

In the step A, a hydrophilic medium can be optionally present. The hydrophilic medium includes ethanol, isopropanol, t-butanol, ethylene glycol, propylene glycol, 1,2-butanediol, 1,3-butanediol, N-methylpyrrolidone, dimethylformamide, dimethyl sulfoxide, dimethylacetamide, 1,3-dimethyl-2-imidazolidinone, acetone, methyl ethyl ketone, methyl isobutyl ketone, tetrahydrofuran, 1,4-dioxane, and the like.

(Surfactant)

The surfactant used in the present invention is not particularly limited so long as the surfactant has surface activities.

The kinds of the surfactants which can be used include cationic surfactants, anionic surfactants, nonionic surfactants, and amphoteric surfactants. Among them, when unmodified cellulose raw materials are used as cellulose raw materials, cationic surfactants, anionic surfactants, and amphoteric surfactants are preferred, and more preferably

cationic surfactants, from the viewpoint of improvement in the reaction selectivity. Also, in a case where cellulose raw materials introduced with a substituent having from 1 to 5 carbon atoms at a group in which a hydrogen atom is removed from a hydroxyl group of a part of a cellulose backbone are used, cationic surfactants, anionic surfactants, and nonionic surfactants are preferred, from the viewpoint of improvement in the reaction selectivity.

The number of carbon atoms owned by a hydrocarbon group of the surfactant is preferably 6 or more, more preferably 7 or more, even more preferably 8 or more, and even more preferably 10 or more, from the viewpoint of improvement in the reaction selectivity. In addition, the number of carbon atoms is preferably 40 or less, more preferably 36 or less, even more preferably 30 or less, and even more preferably 20 or less, from the viewpoint of improvement in the reaction selectivity and availability. The hydrocarbon group includes alkyl groups such as a hexyl group, a cyclohexyl group, an octyl group, a 2-ethylhexyl group, a nonyl group, a decyl group, a dodecyl group, and tetradecyl group; aryl groups such as a phenyl group, a tolyl group, a xylyl group, and a naphthyl group; aralkyl groups such as a benzyl group, a phenylethyl group, a phenylpropyl group, and a trityl group; and alkenyl groups such as a hexenyl group, a cyclohexenyl group, and an octenyl group. The alkyl groups and the aralkyl groups are preferred, and the alkyl groups are more preferred, from the viewpoint of availability.

As the cationic surfactant, for example, quaternary ammonium salts and alkylamine salts can be used. The quaternary ammonium salts are preferred, from the viewpoint of availability. The preferred range of the hydrocarbon groups owned by the cationic surfactants are the same as the hydrocarbon groups owned by the surfactants mentioned above.

The quaternary ammonium salt preferably has an alkyl group having 6 or more carbon atoms, more preferably has an alkyl group having 8 or more carbon atoms, and more preferably has an alkyl group having 10 or more carbon atoms, from the viewpoint of improvement in the reaction selectivity.

Specific examples of the quaternary ammonium salt include the following general formula (A-1):

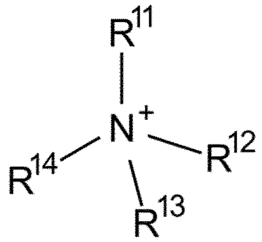

(A-1)

wherein each of $R^{11}$, $R^{12}$, $R^{13}$, and $R^{14}$ is independently a hydrocarbon group having 1 or more carbon atoms.

The hydrocarbon group may be, for example, a methyl group, an ethyl group, a butyl group, a hexyl group, an octyl group, a 2-ethylhexyl group, a decyl group, a dodecyl group, a tetradecyl group, a hexadecyl group, a stearyl group, or a benzyl group. Among them, at least one hydrocarbon group out of $R^{11}$, $R^{12}$, $R^{13}$, and $R^{14}$ is preferably a decyl group, a dodecyl group, a tetradecyl group, a hexadecyl group, a stearyl group, and at least one hydrocarbon group out of $R^{11}$, $R^{12}$, $R^{13}$, and $R^{14}$ is more preferably a dodecyl group, from the viewpoint of improvement in the reaction selectivity. The counter-anion for the quaternary ammonium salt includes halide ions, organic acid ions such as acetate ions and formate ions, and inorganic acid ions such as nitrate ions and phosphate ions. The counter-anion for the quaternary ammonium salt is more preferably halide ions and organic acid ions, and even more preferably halide ions. The halide ions include chloride ions, bromide ions, iodide ions, and fluoride ions, and chloride ions and bromide ions are preferred. Specifically, the quaternary ammonium salt is exemplified by dodecyltrimethylammonium chloride, and the like.

The alkylamine salt preferably has an alkyl group having 6 or more carbon atoms, more preferably has an alkyl group having 8 or more carbon atoms, and more preferably has an alkyl group having 10 or more carbon atoms, from the viewpoint of improvement in the reaction selectivity.

Specific examples of the alkylamine salt include the following general formula (A-2):

$$R^{15}\text{-}NH_3^+ \qquad \text{(A-2)}$$

wherein each of $R^{15}$ is independently a hydrocarbon group having 6 or more carbon atoms.

The hydrocarbon group may be, for example, a hexyl group, an octyl group, a decyl group, a 2-ethylhexyl group, a dodecyl group, a tetradecyl group, a hexadecyl group, a stearyl group, or a benzyl group. Specific examples include dodecylamine acetates, octadecylamine acetates, and the like.

The counter-anion for the alkylamine salt includes halide ions, organic acid ions such as acetate ions and formate ions, and inorganic acid ions such as nitrate ions and phosphate ions. The counter-anion for the alkylamine salt is more preferably halide ions and organic acid ions, and even more preferably organic acid ions. The organic acid ions are preferably acetate ions. Specific examples include dodecylamine acetates, tetradecylamine acetates, octadecylamine acetates, and the like.

As the anionic surfactant, for example, an alkyl carboxylate (formula (B)):

$R^{21}$-$COO^{-}$ (B)

a phosphate ester salt (formula (C)):

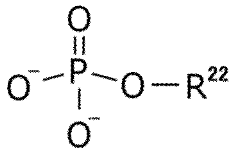

(C)

an alkyl sulfate ester salt (formula (D)):

$R^{23}$-$SO^{3-}$ (D)

a polyoxyethylene alkyl ether sulfate ester salt (formula (E)):

$R^{24}$-O-(AO)n-$SO^{3-}$ (E)

an alkylbenzenesulfonate (formula (F)):

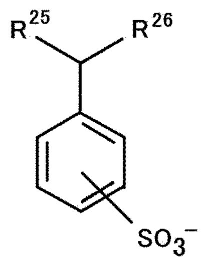

(F)

can be used. Preferably, the alkyl sulfate ester salt, the polyoxyethylene alkyl ether sulfate ester salt, and the alkylbenzenesulfonate are preferred, from the viewpoint of availability. Of the side chains in the surfactant structures, i.e. $R^{22}$ to $R^{26}$ of the above formulas (B) to (F), the number of carbon atoms of the longest alkyl side chain is preferably 6 or more, more preferably 7 or more, and even more preferably 8 or more, from the viewpoint of improvement in the reaction selectivity. The number of carbon atoms is preferably 40 or less, more preferably 20 or less, and even more preferably 18 or less, from the viewpoint of availability and costs.

Specifically, laurylsulfate (C12), laurylsulfate triethanolamine (C12), ammonium laurylsulfate (C12), polyethylene lauryl ether sulfates (C12), polyoxyethylene alkyl ether sulfates (C8-18), polyoxyethylene alkyl ether triethanolamine (C8-18), di-2-ethylhexylsulfosuccinates (C8), ditridecylsulfosuccinates (C13), dodecylbenzenesulfonates (C12), dodecylnaphthalenesulfonates (C12), alkyl diphenyl ether disulfonates (C8-C18), octadecyl carboxylates (C8), dodecyl carboxylates (C12), stearyl carboxylates (C18), polyoxyethylene ether phosphates (C8-18) are preferred, from the viewpoint of improvement in the reaction selectivity. The counter-cation is preferably alkali metal ions, ammonium ions, or triethanolamine. Na ions and K ions are more preferred, and Na ions are even more preferred, from the viewpoint of availability.

The nonionic surfactant includes polyoxyethylene alkyl ethers, polyoxyalkylene derivatives, fatty acid esters of low-molecular weight sugars such as sorbitan fatty acid esters and sucrose fatty acid esters, alkyl ether compounds of low-molecular weight sugars such as alkyl glycosides and alkyl galactosides, polyoxyethylene sorbitan fatty acid esters, glycerol fatty acid esters, polyoxyethylene fatty acid esters, alkyl alkanolamides, and polyoxyethylene alkylamines. The polyoxyethylene alkyl ethers, the sorbitan fatty acid esters, the polyoxyalkylene derivatives, and the polyoxyethylene sorbitan fatty acid esters are preferred, and the polyoxyethylene alkyl ethers and the sorbitan fatty acid esters are more preferred, from the viewpoint of availability. The number of carbon atoms of the longest side chain out of the side chain in the surfactant structure is preferably 8 or more, more preferably 9 or more, and even more preferably 10 or more, from the viewpoint of improvement in the reaction selectivity. The number of carbon atoms is preferably 40 or less, more preferably 20 or less, and even more preferably 18 or less, from the viewpoint of availability and costs. Specifically, the compound having an alkyl group having 8 carbon atoms includes polyoxyethylene 2-ethylhexyl ethers and polyoxyethylene octylphenyl ethers. The compound having an alkyl group having 12 carbon atoms includes polyoxyethylene octyldodecyl ethers, polyoxyethylene lauryl ethers, sorbitan monolaurate, and polyoxyethylene sorbitan monolaurate. The compound having an alkyl group having 14 carbon atoms includes polyoxyethylene myristyl ethers. The compound having an alkyl group having 16 carbon atoms includes polyoxyethylene cetyl ethers and sorbitan monopalmitate. The compound having an alkyl group having 18 carbon atoms includes polyoxyethylene stearyl ethers, polyoxyethylene oleyl ethers, sorbitan monostearate, sorbitan tristearate, and glycerol monostearate.

As the amphoteric surfactant, an alkyl betaine or an alkylamine oxide can be used. The alkyl betaine is preferred, from the viewpoint of availability. The number of carbon atoms of the longest side chain of the amphoteric surfactant out of the side chains in the surfactant structures is preferably 8 or more, more preferably 10 or more, and even more preferably 12 or more, from the viewpoint of availability and improvement in the reaction selectivity. The number of carbon atoms is preferably 30 or less, more preferably 20 or less, and even more preferably 18 or less, from the viewpoint of availability and costs. Specifically, the compound having an alkyl group having 12 carbon atoms includes lauryldimethylaminoacetate betaine, dodecylaminomethyldimethylsulfopropyl betaine, cocamidopropyl betaine, and lauryldimethylamine oxide. The compound having an alkyl group having 14 carbon atoms includes tetradecyldimethylamine oxide. The compound having an alkyl group having 18 carbon atoms includes stearyldimethylaminoacetate betaine, octadecylaminomethyldimethylsulfopropyl betaine, and stearyldimethylamine oxide.

(Substituent Having 6 or More Carbon Atoms)

The substituent to be introduced in the method for producing a modified cellulose of the present invention is a substituent having 6 or more carbon atoms that is bonded to a group in which a hydrogen atom is removed from a hydroxyl group of a cellulose backbone. The number of carbon atoms of the above substituent is preferably 7 or more, more preferably 8 or more, and even more preferably 10 or more, from the viewpoint of exhibition of the hydrophobicity, and the number of carbon atoms is preferably 26 or less, more preferably 22 or less, and even more preferably 18 or less, from the viewpoint of availability and the reactivities.

It is preferable that the substituent to be introduced in the method for producing a modified cellulose of the present invention is a substituent represented by the following general formulas (1), (2), and (3):

$$-R^1 \qquad (1)$$

$$-CH_2-CH(OH)-R^2 \qquad (2)$$

$$-CH_2-CH(OH)-CH_2-(OA)_n-O-R^3 \qquad (3)$$

wherein $R^1$ is a hydrocarbon group having 6 or more carbon atoms and 30 or less carbon atoms; $R^2$ is a hydrocarbon group having 4 or more carbon atoms and 30 or less carbon atoms; $R^3$ is a hydrocarbon group having 3 or more carbon atoms and 30 or less carbon atoms; n is the number of 0 or more and 50 or less; and A is a linear or branched divalent hydrocarbon group having 2 or more carbon atoms and 6 or less carbon atoms,

from the viewpoint of the reactivities. These substituents are introduced alone or in any combinations.

$R^1$ in the general formula (1) is a hydrocarbon group having 6 or more carbon atoms and 30 or less carbon atoms. The preferred number of carbon atoms of the hydrocarbon group is preferably 7 or more, and more preferably 8 or more, from the viewpoint of exhibition of the hydrophobicity, and the number of carbon atoms is preferably 26 or less, more preferably 22 or less, and even more preferably 18 or less, from the viewpoint of availability and the reactivities. Specific examples include saturated alkyl groups such as a hexyl group, a heptyl group, an octyl group, a 2-ethylhexyl group, a nonyl group, a decyl group, an undecyl group, a dodecyl group, a hexadecyl group, an octadecyl group, an icosyl group, and a triacontyl group; unsaturated alkyl groups such as a hexenyl group, a heptenyl group, an octenyl group, a nonenyl group, a decenyl group, an undecenyl group, a dodecenyl group, a hexadecenyl group, and an octadecenyl group; and substitutes having a ring structure such as a cyclohexyl group, a phenyl group, a benzyl group, a naphthyl group, and a trityl group.

$R^2$ in the general formula (2) is a hydrocarbon group having 4 or more carbon atoms and 30 or less carbon atoms. The preferred number of carbon atoms of the hydrocarbon group is preferably 6 or more, more preferably 7 or more, and even more preferably 8 or more, from the viewpoint of exhibition of the hydrophobicity, and the number of carbon atoms is preferably 26 or less, more preferably 22 or less, and even more preferably 18 or less, from the viewpoint of availability and the reactivities. Specific examples include saturated alkyl groups such as a butyl group, a pentyl group, a hexyl group, a heptyl group, an octyl group, a 2-ethylhexyl group, a nonyl group, a decyl group, an undecyl group, a dodecyl group, a hexadecyl group, an octadecyl group, an icosyl group, and a triacontyl group; unsaturated alkyl groups such as a hexenyl group, a heptenyl group, an octenyl group, a nonenyl group, a decenyl group, an undecenyl group, a dodecenyl group, a hexadecenyl group, and an octadecenyl group; and substitutes having a ring structure such as a

cyclohexyl group, a phenyl group, a benzyl group, a naphthyl group, and a trityl group.

$R^3$ in the general formula (3) is a hydrocarbon group having 3 or more carbon atoms and 30 or less carbon atoms. The number of carbon atoms of the hydrocarbon group is preferably 6 or more, more preferably 7 or more, and even more preferably 8 or more, from the viewpoint of exhibition of the hydrophobicity, and the number of carbon atoms is preferably 26 or less, more preferably 22 or less, and even more preferably 18 or less, from the viewpoint of availability and the reactivities. Specific examples include saturated alkyl groups such as a propyl group, a butyl group, a pentyl group, a hexyl group, a heptyl group, an octyl group, a 2-ethylhexyl group, a nonyl group, a decyl group, an undecyl group, a dodecyl group, a hexadecyl group, an octadecyl group, an icosyl group, and a triacontyl group; unsaturated alkyl groups such as a hexenyl group, a heptenyl group, an octenyl group, a nonenyl group, a decenyl group, an undecenyl group, a dodecenyl group, a hexadecenyl group, and an octadecenyl group; and substitutes having a ring structure such as a cyclohexyl group, a phenyl group, a benzyl group, a naphthyl group, and a trityl group.

A in the general formula (3) is a linear or branched divalent hydrocarbon group having 2 or more carbon atoms and 6 or less carbon atoms, which is bonded to an adjoining oxygen atom to form an oxyalkylene group. Specifically, an ethylene group and a propylene group are preferred, and an ethylene group is more preferred.

n in the general formula (3) is the number of moles of an (OA)n group added. n is a number of 0 or more and 50 or less, and n is preferably 3 or more, more preferably 5 or more, and even more preferably 10 or more, from the viewpoint of availability and costs, and n is preferably 40 or less, more preferably 30 or less, even more preferably 20 or less, and even more preferably 15 or less, from the same viewpoint and from the viewpoint of the affinity with the low-polarity solvent.

(Etherification Agent)

From the viewpoint of the reactivities, as the etherification agent, a compound having a ring structured group or an organic halogenated compound each having reactivity is preferably used, and a compound having an epoxy group and/or a halogenated hydrocarbon group is more preferably used. The compounds for introducing a substituent represented by the above general formula (1), (2), or (3) will be exemplified hereinbelow.

It is preferable that the compound having a substituent represented by the general formula (1) is, for example, a compound having a halogenated hydrocarbon group represented by the following general formula (1A):

$X\text{-}R^1$ (1A)

wherein X is a halogen atom; and $R_1$ is a hydrocarbon group having 6 or more carbon atoms and 30 or less carbon atoms.

As the compound, one prepared in accordance with a known technique may be used, or a commercially available product may be used. Here, $R^1$ in the general formula (1A) and preferred embodiments thereof are the same as those of $R^1$ of the above general formula (1).

Specific examples of the compound represented by the general formula (1A) include 1-chlorohexane and isomers thereof, 1-chlorodecane and isomers thereof, 1-chlorododecane and isomers thereof, 1-chlorohexadecane and isomers thereof, 1-chlorooctadecane and isomers thereof, 1-chloroeicosane and isomers thereof, 1-chlorotriancosane and isomers thereof, 1-chloro-5-hexene and isomers thereof, chlorocyclohexane, chlorobenzene, benzyl chloride, naphthyl chloride, trityl chloride, and those compounds in which chlorine of the above compounds is substituted with bromine or iodine.

It is preferable that the compound having a substituent represented by the general formula (2) is, for example, an alkylene oxide compound represented by the following general formula (2A):

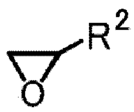

(2A)

wherein $R^2$ is a hydrogen or a hydrocarbon group having 4 or more carbon atoms and 30 or less carbon atoms.

As the compound, one prepared in accordance with a known technique may be used, or a commercially available product may be used. Here, the details for $R^2$ in the general formula (2A) are the same as explained for the above general formula (2).

Specific examples of the compound represented by the general formula (2A) include 1,2-epoxyoctane, 1,2-epoxydecane, 1,2-epoxy-9-decene, 1,2-epoxydodecane, 1,2-epoxyhexadecane, 1,2-epoxyoctadecane, 1,2-epoxy-17-octadecene, 1,2-epoxyeicosane, styrene oxide and derivatives thereof.

It is preferable that the compound having a substituent represented by the general formula (3) is, for example, a glycidyl ether compound represented by the following general formula (3A):

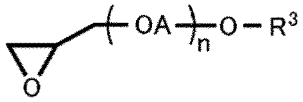

(3A)

wherein $R^3$ is a hydrocarbon group having 3 or more carbon atoms and 30 or less carbon atoms; n is the number of 0 or more and 50 or less; and A is a linear or branched divalent hydrocarbon group having 2 or more carbon atoms and 6 or less carbon atoms.

As the compound, one prepared in accordance with a known technique may be used, or a commercially available product may be used. Here, the details for $R^3$, A, and n in the general formula (3A) are the same as explained for the above general formula (3).

Specific examples of the compound represented by the general formula (3A) include 2-ethylhexyl glycidyl ether, lauryl glycidyl ether, stearyl glycidyl ether, isostearyl glycidyl ether, polyoxyalkylene alkyl ethers, 5-hexenyl glycidyl ether, 9-decenyl glycidyl ether, 9-octadecenyl glycidyl ether, 17-octadecenyl glycidyl ether, phenyl glycidyl ether, trityl glycidyl ether, benzyl glycidyl ether, and derivatives thereof.

(Base)

In the method for producing a modified cellulose of the present invention, it is preferable that the above cellulose raw materials are mixed with a base, from the viewpoint of progressing the etherification reaction.

As the base used in the present invention, an inorganic base or an organic base can be used. As the inorganic base, one or more members selected from the group consisting of alkali metal hydroxides and alkaline earth metal hydroxides are preferred, from the viewpoint of progressing the etherification reaction in a reaction system containing water. In particular, preferred are sodium hydroxide, potassium hydroxide, lithium hydroxide, calcium hydroxide, and barium hydroxide, and more preferred are sodium hydroxide, potassium hydroxide, and calcium hydroxide, even more preferred are sodium hydroxide and potassium hydroxide, and especially preferred is sodium hydroxide, from the viewpoint of availability and costs. In addition, as the organic base, one or more members selected from quaternary ammonium hydroxides are preferred, from the viewpoint of progressing the etherification reaction in a reaction system containing water. In particular, preferred are tetramethylammonium hydroxide, tetraethylammonium hydroxide, tetrabutylammonium hydroxide (TBAH), and more preferred is tetrabutylammonium hydroxide (TBAH), from the viewpoint of availability and costs.

In the mixing of the cellulose raw materials and the base, the temperature and the time are not particularly limited so long as the cellulose raw materials and the base can be homogeneously mixed.

(Etherification Reaction)

The etherification reaction of the etherification agent and the cellulose raw materials can be carried out by mixing both the components in the presence of water and a surfactant.

The operational procedures are exemplified by, for example, a method of carrying out the reaction including adding water, a surfactant, and optionally a base such as sodium hydroxide, in this order, to cellulose raw materials, mixing the components at room temperature for 30 minutes or more, adding an etherification agent to the mixture, and mixing the components while heating. In the procedures, it is irrespective of the orders so long as the cellulose raw materials, a surfactant, and an etherification agent can be homogeneously mixed. The mixing time depends upon the reaction scale or the kinds and amounts of the etherification agent used, which cannot be unconditionally determined. The reaction may be carried out while properly stirring with agitation blades, a magnetic stirrer, or the like, from the viewpoint of homogeneously carrying out the reaction and from the viewpoint of eliminating the imbalance in thermal distribution during the reaction. The etherification agents may be added in two or more kinds in this single step.

The amount of water depends upon the cellulose raw materials and the kinds of the compound for introducing a substituent, which cannot be unconditionally determined. The amount of water, based on 100 parts by mass of the cellulose raw materials, is preferably 15 parts by mass or more, more preferably 30 parts by mass or more, even more preferably 50 parts by mass or more, even more preferably 75 parts by mass or more, and even more preferably 100 parts by mass or more, from the viewpoint of the reactivities, and the amount of water is preferably 10,000 parts by mass or less, more preferably 7,500 parts by mass or less, and even more preferably 5,000 parts by mass or less, from the viewpoint of productivity.

The amount of the surfactant, per one mol of the anhydrous glucose unit (which may be hereinafter abbreviated as "AGU") of the cellulose raw materials, is preferably 0.005 equivalents or more, more preferably 0.01 equivalents or more, and even more preferably 0.03 equivalents or more, from the viewpoint of the optimal surfactant concentration for progressing the etherification reaction, and the amount of the surfactant is preferably 5 equivalents or less, more

preferably 1 equivalent or less, even more preferably 0.1 equivalents or less, and even more preferably 0.05 equivalents or less, from the viewpoint of production costs.

In addition, the amount of the surfactant, per one mol of the anhydrous glucose unit of the cellulose raw materials, is preferably 0.005 mol or more, more preferably 0.01 mol or more, and even more preferably 0.03 mol or more, from the same viewpoint as above, and the amount of the surfactant is preferably 5 mol or less, more preferably 1 mol or less, even more preferably 0.1 mol or less, and even more preferably 0.05 mol or less, from the viewpoint of production costs.

The amount of the etherification agent depends upon the extent of the desired introduction of the substituent in the modified cellulose obtained and the structure of the etherification agent used, which cannot be unconditionally determined. For example, the amount of the etherification agent, per one mol of the anhydrous glucose unit of the cellulose raw materials, is preferably 10.0 equivalents or less, more preferably 8.0 equivalents or less, even more preferably 7.0 equivalents or less, and even more preferably 6.0 equivalents or less, and preferably 0.02 equivalents or more, more preferably 0.05 equivalents or more, even more preferably 0.1 equivalents or more, even more preferably 0.3 equivalents or more, and even more preferably 0.5 equivalents or more, from the viewpoint of the mechanical strength of the molded article of the resin composition obtained when the modified cellulose is applied to the resin composition. Here, when two or more kinds of the etherification agents are used, the amount of the etherification agents is a total amount of individual etherification agents.

In addition, the amount of the etherification agent, per one mol of the anhydrous glucose unit of the cellulose raw materials, is preferably 10.0 mol or less, more preferably 8.0 mol or less, even more preferably 7.0 mol or less, and even more preferably 6.0 mol or less, and preferably 0.02 mol or more, more preferably 0.05 mol or more, even more preferably 0.1 mol or more, even more preferably 0.3 mol or more, and even more preferably 0.5 mol or more, from the same viewpoint as above.

The concentration of the etherification agent in the mixture of the entire components in the step A depends upon the extent of the desired introduction of the substituent in the modified cellulose obtained and the structure of the etherification agent used, which cannot be unconditionally determined. The concentration is preferably 1% by mass or more, more preferably 5% by mass or more, and even more preferably 10% by mass or more, from the viewpoint of the reaction efficiency. On the other hand, the concentration is preferably 80% by mass or less, more preferably 70% by mass or less, even more preferably 60% by mass or less, even more preferably 55% by mass or less, and even more preferably 52% by mass or less, from the viewpoint of the production efficiency.

The amount of the base, per one mol of the anhydrous glucose unit of the cellulose raw materials, is preferably 0.01 equivalents or more, more preferably 0.05 equivalents or more, even more preferably 0.1 equivalents or more, and even more preferably 0.2 equivalents or more, from the viewpoint of progressing the etherification reaction, and the amount is preferably 10 equivalents or less, more preferably 8 equivalents or less, even more preferably 5 equivalents or less, and even more preferably 3 equivalents or less, from the viewpoint of the production costs.

In addition, the amount of the base, per one mol of the anhydrous glucose unit of the cellulose raw materials, is preferably 0.01 mol or more, more preferably 0.05 mol or more, even more preferably 0.1 mol or more, and even more preferably 0.2 mol or more, from the same viewpoint as above, and the amount is preferably 10 mol or less, more preferably 8 mol or less, even more preferably 5 mol or less, and even more preferably 3 mol or less, from the viewpoint of the production costs.

The mixing conditions are not particularly limited so long as the cellulose raw materials and the etherification agent are homogeneously mixed, so that the reaction can be sufficiently progressed, and continuous mixing treatment may or may not be carried out. In a case where a relatively large reaction vessel is used, stirring may be appropriately carried out from the viewpoint of controlling the reaction temperature.

The reaction temperature depends upon the kinds of the cellulose raw materials and the etherification agent and the targeted degree of introduction of the substituents, which cannot be unconditionally determined. The reaction temperature is preferably 25°C or higher, more preferably 30°C or higher, even more preferably 35°C or higher, even more preferably 40°C or higher, and even more preferably 45°C or higher, from the viewpoint of improvement in the reactivities, and the temperature is preferably 120°C or lower, more preferably 110°C or lower, even more preferably 100°C or lower, even more preferably 90°C or lower, even more preferably 80°C or lower, and even more preferably 70°C or lower, from the viewpoint of inhibition of pyrolysis. In addition, heating and cooling processes may be optionally provided.

The reaction time depends upon the kinds of the cellulose raw materials and the etherification agent and the targeted degree of introduction, which cannot be unconditionally determined. The reaction time is preferably 0.1 hours or more, more preferably 0.5 hours or more, even more preferably 1 hour or more, even more preferably 2 hours or more, and even more preferably 4 hours or more, from the viewpoint of the reactivities, and the reaction time is preferably 60 hours or less, more preferably 48 hours or less, and even more preferably 36 hours or less, from the viewpoint of productivity.

Subsequent to the reaction, a post-treatment can be appropriately carried out, in order to remove an unreacted

compound, an unreacted base, or the like. As the method for a post-treatment, for example, an unreacted base can be neutralized with an acid (an organic acid, an inorganic acid, or the like), and thereafter an unreacted compound or base can be washed with a solvent capable of dissolving the unreacted compound or base. As desired, drying (vacuum drying or the like) may be further carried out.

(Other Steps)

The method for producing a modified cellulose of the present invention may optionally comprise some steps, besides the step A mentioned above, such as a step of introducing a substituent having 1 or more carbon atoms and 5 or less carbon atoms (step B), a step of including a medium other than water, a finely pulverizing step, or the like.

(step B)

The step B is a step of including preparing a cellulose raw material introduced with a substituent having 1 or more carbon atoms and 5 or less carbon atoms to a group in which a hydrogen atom is removed from a hydroxyl group of a cellulose back bone.

The step B can be carried out by a known method, or in the same manner as the above step A. The substituent to be introduced is exemplified by the following general formulas (4), (5), and (6).

$-R^4$ (4)

$-CH_2-CH(OH)-R^5$ (5)

$-CH_2-CH(OH)-CH_2-(OA)_n-O-R^6$ (6)

wherein $R^4$ is a hydrocarbon group having 1 or more carbon atoms and 5 or less carbon atoms; $R^5$ is hydrogen, or a hydrocarbon group having 1 or more carbon atoms and 3 or less carbon atoms; $R^6$ is hydrogen, or a hydrocarbon group having 1 or more carbon atoms and 2 or less carbon atoms; n is the number of 0 or more and 2 or less; and A is a divalent hydrocarbon group having 2 or more carbon atoms and 6 or less carbon atoms.

In other words, examples of specific embodiments of the step B include the step of introducing a cellulose raw material with one or more substituents selected from the group consisting of the above general formulas (4), (5) and (6) to a group in which a hydrogen atom is removed from a hydroxyl group of a cellulose back bone, in the presence of water and a surfactant. Here, as the etherification agent for introducing a substituent represented by the above general formulas (4), (5) and (6), a compound having a halogenated hydrocarbon group, an alkylene oxide compound, a glycidyl ether compound, or the like, each having the following $R^4$, $R^5$, or $R^6$ or the like, can be used, in the same manner as in the above general formulas (1), (2), and (3). In addition, in the step B, a hydrophilic medium can be optionally present in the same manner as in the step A.

The step B can be carried out concurrently with the step A. Therefore, the method for producing a modified cellulose when including the step B includes a method for production including the step B and the step A concurrently, or including sequentially the step B and the step A. In the step A of introducing a substituent having 6 or more carbon atoms mentioned above, by using a cellulose introduced with a substituent having 1 or more carbon atoms and 5 or less carbon atoms obtained in the step B, the reaction selectivity of the substituent would be more preferred.

(Finely Pulverizing Step)

The modified cellulose obtained by the method for producing a modified cellulose of the present invention may be further subjected to a finely pulverizing treatment. For example, the modified cellulose can be finely pulverized by a treatment using a grinder such as Masscolloider, or a treatment using a high-pressure homogenizer or the like in a solvent.

(Modified Cellulose)

The modified cellulose obtained by the method for producing a modified cellulose of the present invention is a cellulose introduced with a substituent having 6 or more carbon atoms via an ether bond. The embodiments of the modified cellulose obtained by the method for producing a modified cellulose of the present invention include modified cellulose fibers having a cellulose I crystal structure and modified cellulose fibers without having a cellulose I crystal structure. The modified cellulose fibers having a cellulose I crystal structure are preferred, from the viewpoint of giving mechanical properties to the resin.

(Resin Composition)

The modified cellulose obtained by the method for producing a modified cellulose of the present invention can be used in the form of a resin composition by mixing the modified cellulose with a resin, such as a thermoplastic resin, a thermosetting resin, a photo-curable resin, a cellulosic resin, or an elastomeric resin. The resins can be used alone or in combination of two or more kinds. In addition, a resin-containing composition can be subjected to a known molding method such as a solvent cast method, spinning, extrusion molding, injection molding, or press molding, to provide a molded article. The resin composition and the resin molded article as used herein are embraced in the present invention.

The thermoplastic resin includes saturated polyester resins such as polylactic acid resins, olefinic resins such as polyethylene resins and polypropylene resins, vinyl chloride resins, styrene resins, (meth)acrylic resins, phenoxy resins, vinyl ether resins, polyvinyl alcohol resins, polyvinyl acetal resins, polyvinyl acetate resins, polyamide resins, polycarbonate resins, polysulfonate resins, and the like. These thermoplastic resins may be used alone or may be used as mixed resins of two or more kinds. Among them, the saturated polyester resins, the olefinic resins, the vinyl chloride resins, the styrene resins, the (meth)acrylic resins, and the polyamide resins are preferred, from the viewpoint of exhibition of the effects of the present invention. Here, the term (meth)acrylic resin as used herein means to embrace methacrylic resins and acrylic resins.

The curable resin is preferably a photo-curable resin and/or a thermosetting resin.

The photo-curable resin allows to progress the polymerization reaction by irradiation of active energy rays such as ultraviolet rays or electron beams, using a photopolymerization initiator that generates a radical or a cation.

The above photopolymerization initiator includes, for example, acetophenones, benzophenones, ketals, anthraquinones, thioxanthones, azo compounds, peroxides, 2,3-dialkyldione compounds, disulfide compounds, thiuram compounds, fluoroamine compounds, and the like.

With the photopolymerization initiator, for example, a monomer (monofunctional monomer, polyfunctional monomer), or an oligomer or resin or the like, having a reactive unsaturated group can be polymerized.

The thermosetting resin includes, for example, epoxy resins, phenolic resins, urea resins, melamine resins, unsaturated polyester resins, diallyl phthalate resins, polyurethane resins, silicone resins, polyimide resins, and the like. The thermosetting resins can be used alone or in a combination of two or more kinds. Among them, the epoxy resins, the phenolic resins, the urea resins, the melamine resins, the unsaturated polyester resins, and the polyurethane resins are preferred, and the epoxy resins are more preferred, from the viewpoint of exhibition of the effects of the present invention.

When an epoxy resin is used in the above resin component, it is preferable to use a curing agent. By blending a curing agent, molding materials obtained from the resin composition can be firmly molded, whereby the mechanical strength can be improved. Here, the content of the curing agent may be appropriately set depending upon the kinds of the curing agents used.

The cellulosic resin includes organic acid esters of cellulose mixed acylates such as cellulose acetate and cellulose acetate propionate; inorganic acid esters such as nitrate cellulose and phosphate cellulose; mixed acid esters of organic acid-inorganic acid such as acetate nitrate cellulose; cellulose ether esters such as acetylated hydroxypropyl cellulose; and the like.

As the elastomeric resin, a diene-based rubber or a non-diene-based rubber is preferred.

The diene-based rubber includes natural rubbers, polyisoprene rubbers, polybutadiene rubbers, styrene-butadiene copolymer rubbers, butyl rubbers, butadiene-acrylonitrile copolymer rubbers, chloroprene rubbers, modified natural rubbers, and the like. The modified natural rubber includes epoxidized natural rubbers, hydrogenated natural rubbers, and the like. The non-diene-based rubber includes butyl rubbers, ethylene-propylene rubbers, ethylene-propylene-diene rubbers, urethane rubbers, silicone rubbers, fluorine-containing rubbers, acrylic rubbers, vulcanized rubbers, epichlorohydrin rubbers, and the like.

The blending amount of the modified cellulose in the resin composition, based on 100 parts by mass of the resin, calculated in terms of the unmodified cellulose, is preferably 0.05 parts by mass or more, more preferably 0.1 parts by mass or more, even more preferably 0.3 parts by mass or more, even more preferably 0.5 parts by mass or more, and even more preferably 1 part by mass or more, from the viewpoint of exhibition of the mechanical properties in the molded article of the resin composition. On the other hand, the blending amount is preferably 60 parts by mass or less, more preferably 50 parts by mass or less, even more preferably 30 parts by mass or less, even more preferably 20 parts by mass or less, and even more preferably 10 parts by mass or less, from the viewpoint of the production costs.

The blending amount of the resin in the resin composition is preferably 10% by mass or more, more preferably 20% by mass or more, more preferably 30% by mass or more, and even more preferably 40% by mass or more, from the viewpoint of exhibition of the inherently owned properties of the resin. On the other hand, the blending amount is preferably 99.9% by mass or less, more preferably 99% by mass or less, more preferably 90% by mass or less, and even more preferably 80% by mass or less, from the viewpoint of the additive effects of the modified cellulose.

[Other Components]

The modified cellulose of the present invention may contain other components, including, for example, a plasticizer, a curing agent, a curing accelerator, a crystal nucleating agent, a filler including an inorganic filler and an organic filler, a hydrolysis inhibitor, a flame retardant, an antioxidant, a lubricant such as a hydrocarbon wax or an anionic surfactant, an ultraviolet absorbent, an antistatic agent, an anti-clouding agent, a photo stabilizer, a pigment, a mildewproof agent, a bactericidal agent, a blowing agent, or a surfactant; a polysaccharide such as starch or alginic acid; a natural protein such as gelatin, glue, or casein; tannin; a perfume; a fluidity modulator; a leveling agent; an electroconductive agent; an ultraviolet dispersant; a deodorant; or the like, in accordance with their applications. Further, other polymeric materials and other compositions can be added.

(Crystallinity)

The crystallinity of the modified cellulose obtained by the method for producing a modified cellulose of the present invention is preferably 10% or more, more preferably 15% or more, and even more preferably 20% or more, from the viewpoint of exhibition of strength of the molded article obtained when the modified cellulose is applied to a resin composition. In addition, the crystallinity is preferably 90% or less, more preferably 85% or less, even more preferably 80% or less, and even more preferably 75% or less, from the viewpoint of availability of the raw materials. The crystallinity of the cellulose as used herein is a cellulose I crystallinity calculated from diffraction intensity values according to X-ray diffraction method, which can be measured in accordance with a method described in Examples set forth below. Here, cellulose I is a crystalline form of a natural cellulose, and the cellulose I crystallinity means a proportion of the amount of crystalline region that occupies the entire cellulose. The presence or absence of the cellulose I crystal structure can be judged by the presence of a peak at $2\theta = 22.6°$ in the X-ray diffraction measurement described in Examples set forth below.

(Molar Substitution (MS))

In the modified cellulose obtained by the method for producing a modified cellulose of the present invention, the molar amount of the substituent having 6 or more carbon atoms introduced, based on one mol of the anhydrous glucose unit (molar substitution: MS) of the cellulose, is preferably 0.001 or more, more preferably 0.005 or more, more preferably 0.01 or more, and even more preferably 0.03 or more, from the viewpoint of exhibition of hydrophobicity. On the other hand, MS is preferably 3 or less, more preferably 2.5 or less, and even more preferably 2 or less, from the viewpoint of the selectivity and the costs. Here, when the substituent having 6 or more carbon atoms is constituted by a plural species of substituents, the MS of the substituent having 6 or more carbon atoms is a total of MS of each of the substituents. The molar substitution (MS) as used herein can be measured in accordance with the method described in Examples set forth below.

(Average Fiber Diameter)

The average fiber diameter in a case where the modified cellulose obtained by the method for producing a modified cellulose of the present invention is modified cellulose fibers, irrespective to the kinds of the substituents, is preferably 5 μm or more. The average fiber diameter is more preferably 7 μm or more, even more preferably 10 μm or more, and even more preferably 15 μm or more, from the viewpoint of handling property, availability, and costs. In addition, the upper limit thereof is, but not particularly set thereto, preferably 10,000 μm or less, more preferably 5,000 μm or less, even more preferably 1,000 μm or less, even more preferably 500 μm or less, and still even more preferably 100 μm or less, from the viewpoint of handling property. Here, the modified cellulose can be in the form of nanofibers by the finely pulverizing treatment mentioned above. The average fiber diameter of the modified cellulose fibers can be measured in the same manner as the cellulose raw materials mentioned above. The details are as described in Examples.

With respect to the above-mentioned embodiments, the present invention further discloses modified celluloses, methods for producing a modified cellulose, a resin composition, and a molded article mentioned hereinbelow.

<1> A method for producing a modified cellulose including the following step A:
step A: introducing a cellulose raw material with a substituent having 6 or more carbon atoms to a group in which a hydrogen atom is removed from a hydroxyl group of a cellulose backbone, in the presence of water and a surfactant.

<2> The method for production according to the above <1>, wherein the substituent having 6 or more carbon atoms contains one or more substituents selected from the group consisting of the following general formulas (1), (2), and (3):

$$-R^1 \qquad (1)$$

$$-CH_2-CH(OH)-R^2 \quad (2)$$

$$-CH_2-CH(OH)-CH_2-(OA)_n-O-R^3 \quad (3)$$

wherein $R^1$ is a hydrocarbon group having 6 or more carbon atoms and 30 or less carbon atoms; $R^2$ is a hydrocarbon group having 4 or more carbon atoms and 30 or less carbon atoms; $R^3$ is a hydrocarbon group having 3 or more carbon atoms and 30 or less carbon atoms; n is the number of 0 or more and 50 or less; and A is a linear or branched divalent hydrocarbon group having 2 or more carbon atoms and 6 or less carbon atoms.

<3> The method for production according to the above <1> or <2>, wherein the number of carbon atoms of the substituent having 6 or more carbon atoms is preferably 7 or more and 26 or less, more preferably 8 or more and 22 or less, and even more preferably 10 or more and 18 or less.

<4> The method for production according to any one of the above <1> to <3>, further comprising the following step B:

step B: introducing a cellulose raw material with a substituent having 1 or more carbon atoms and 5 or less carbon atoms to a group in which a hydrogen atom is removed from a hydroxyl group of a cellulose backbone in the presence of water and a surfactant.

<5> The method for production according to the above <4>, wherein the step A and the step B are concurrently carried out.

<6> The method for producing a modified cellulose according to the above <4> or <5>, wherein the step A is carried out subsequent to the step B, wherein the cellulose introduced with a substituent having 1 or more carbon atoms and 5 or less carbon atoms obtained in the step B is used as the cellulose raw material in the step A.

<7> The method for production according to any one of the above <4> to <6>, wherein the substituent having 1 or more carbon atoms and 5 or less carbon atoms is one or more substituents selected from the group consisting of the following general formulas (4), (5) and (6):

$$-R^4 \quad (4)$$

$$-CH_2-CH(OH)-R^5 \quad (5)$$

$$-CH_2-CH(OH)-CH_2-(OA)_n-O-R^6 \quad (6)$$

wherein $R^4$ is a hydrocarbon group having 1 or more carbon atoms and 5 or less carbon atoms; $R^5$ is hydrogen, or a hydrocarbon group having 1 or more carbon atoms and 3 or less carbon atoms; $R^6$ is hydrogen, or a hydrocarbon group having 1 or more carbon atoms and 2 or less carbon atoms; n is the number of 0 or more and 2 or less; and A is a divalent hydrocarbon group having 2 or more carbon atoms and 6 or less carbon atoms.

<8> The method for production according to any one of the above <1> to <7>, wherein the average fiber diameter of the cellulose raw materials is preferably 5 $\mu$m or more and 500 $\mu$m or less, and more preferably 7 $\mu$m or more and 300 $\mu$m or less.

<9> The method for production according to any one of the above <1> to <8>, wherein the average fiber length of the cellulose raw materials is preferably 1,000 $\mu$m or more and 5,000 $\mu$m or less, and more preferably 1,500 $\mu$m or more and 3,000 $\mu$m or less.

<10> The method for production according to any one of the above <1> to <9>, wherein the surfactant is preferably cationic surfactants, anionic surfactants, and amphoteric surfactants, more preferably cationic surfactants, and even more preferably quaternary ammonium salts.

<11> The method for production according to any one of the above <1> to <10>, wherein the number of the carbon atoms of the hydrocarbon group owned by the surfactant is preferably 6 or more and 40 or less, more preferably 7 or more and 36 or less, even more preferably 8 or more and 30 or less, and even more preferably 10 or more and 20 or less.

<12> The method for production according to any one of the above <1> to <11>, wherein the hydrocarbon group owned by the surfactant is preferably alkyl groups such as a hexyl group, a cyclohexyl group, an octyl group, a 2-ethylhexyl group, a nonyl group, a decyl group, a dodecyl group, and tetradecyl group; aryl groups such as a phenyl group, a tolyl group, a xylyl group, and a naphthyl group; aralkyl groups such as a benzyl group, a phenylethyl group, a phenylpropyl group, and a trityl group; and alkenyl groups such as a hexenyl group, a cyclohexenyl group, and an octenyl group.

<13> The method for production according to any one of the above <1> to <12>, wherein the amount of the surfactant, per one mol of AGU of the cellulose raw materials, is preferably 0.005 equivalents or more and 5 equivalents or less, more preferably 0.01 equivalents or more and 1 equivalent or less, even more preferably 0.03 equivalents or

more and 0.1 equivalents or less, and even more preferably 0.03 equivalents or more and 0.05 equivalents or less.

<14> The method for production according to any one of the above <1> to <13>, wherein the amount of the surfactant, per one mol of AGU of the cellulose raw materials, is preferably 0.005 mol or more and 5 mol or less, more preferably 0.01 mol or more and 1 mol or less, even more preferably 0.03 mol or more and 0.1 mol or less, and even more preferably 0.03 mol or more and 0.05 mol or less.

<15> The method for production according to any one of the above <1> to <14>, wherein the amount of the etherification agent, per one mol of AGU of the cellulose raw materials, is preferably 0.02 equivalents or more and 10.0 equivalents or less, more preferably 0.05 equivalents or more and 8.0 equivalents or less, even more preferably 0.1 equivalents or more and 7.0 equivalents or less, even more preferably 0.3 equivalents or more and 6.0 equivalents or less, and even more preferably 0.5 equivalents or more and 6.0 equivalents or less.

<16> The method for production according to any one of the above <1> to <15>, wherein the amount of the etherification agent, per one mol of AGU of the cellulose raw materials, is preferably 0.02 mol or more and 10.0 mol or less, more preferably 0.05 mol or more and 8.0 mol or less, even more preferably 0.1 mol or more and 7.0 mol or less, even more preferably 0.3 mol or more and 6.0 mol or less, and even more preferably 0.5 mol or more and 6.0 mol or less.

<17> The method for production according to any one of the above <1> to <16>, wherein the concentration of the etherification agent in the mixture of the entire components in the step A is preferably 1% by mass or more and 80% by mass or less, more preferably 5% by mass or more and 70% by mass or less, even more preferably 10% by mass or more and 60% by mass or less, even more preferably 10% by mass or more and 55% by mass or less, and even more preferably 10% by mass or more and 52% by mass or less.

<18> The method for production according to any one of the above <1> to <17>, wherein the amount of the base in the etherification reaction, per one mol of AGU of the cellulose raw materials, is preferably 0.01 equivalents or more and 10 equivalents or less, more preferably 0.05 equivalents or more and 8 equivalents or less, even more preferably 0.1 equivalents or more and 5 equivalents or less, even more preferably 0.2 equivalents or more and 3 equivalents or less.

<19> The method for production according to any one of the above <1> to <18>, wherein the amount of the base in the etherification reaction, per one mol of AGU of the cellulose raw materials, is preferably 0.01 mol or more and 10 mol or less, more preferably 0.05 mol or more and 8 mol or less, even more preferably 0.1 mol or more and 5 mol or less, even more preferably 0.2 mol or more and 3 mol or less.

<20> The method for production according to any one of the above <1> to <19>, wherein the modified cellulose has a cellulose I crystal structure.

<21> The method for production according to any one of the above <1> to <20>, wherein the crystallinity of the modified cellulose is preferably 10% or more and 90% or less, more preferably 15% or more and 85% or less, even more preferably 20% or more and 80% or less, and even more preferably 20% or more and 75% or less.

<22> The method for production according to any one of the above <1> to <21>, wherein the modified cellulose is modified cellulose fibers, wherein the average fiber diameter of the modified cellulose fibers is preferably 5 μm or more and 10,000 μm or less, more preferably 7 μm or more and 5,000 μm or less, even more preferably 10 μm or more and 1,000 μm or less, even more preferably 15 μm or more and 500 μm or less, and even more preferably 15 μm or more and 100 μm or less.

<23> The method for production according to any one of the above <1> to <22>, wherein the molar substitution (MS) of the substituent having 6 or more carbon atoms, based on one mol of AGU of the cellulose, in the modified cellulose, is preferably 0.001 MS or more, more preferably 0.005 MS or more, more preferably 0.01 MS or more, and even more preferably 0.03 MS or more.

<24> A modified cellulose obtained by a method for producing a modified cellulose including the step A defined above.

<25> The modified cellulose according to the above <24>, wherein the surfactant in the step A is a surfactant having a hydrocarbon group having 6 or more carbon atoms and 40 or less carbon atoms.

<26> The modified cellulose according to the above <25>, wherein the surfactant is preferably cationic surfactants, anionic surfactants, and amphoteric surfactants, more preferably cationic surfactants, and even more preferably quaternary ammonium salts.

<27> The modified cellulose according to the above <25> or <26>, wherein the number of carbon atoms owned by the surfactant is preferably 6 or more and 40 or less, more preferably 7 or more and 36 or less, even more preferably 8 or more and 30 or less, and even more preferably 10 or more and 20 or less.

<28> The modified cellulose according to any one of the above <25> to <27>, wherein the hydrocarbon group owned by the surfactant is preferably alkyl groups such as a hexyl group, a cyclohexyl group, an octyl group, a 2-ethylhexyl group, a nonyl group, a decyl group, a dodecyl group, and tetradecyl group; aryl groups such as a phenyl group, a tolyl group, a xylyl group, and a naphthyl group; aralkyl groups such as a benzyl group, a phenylethyl group, a phenylpropyl group, and a trityl group; and alkenyl groups such as a hexenyl group, a cyclohexenyl group, and an octenyl group.

<29> A modified cellulose obtained by a method for production as defined in any one of the above <1> to <23>.

<30> A resin composition obtained by mixing a modified cellulose obtained by a method for production as defined in any one of the above <1> to <23> and a resin.

<31> A molded article obtained by molding a resin composition as defined in the above <30>.

## EXAMPLES

The present invention will be described specifically hereinbelow by means of the following Production Examples, Examples, Comparative Examples and Test Examples. Here, the Examples and the like are mere exemplifications of the present invention, without intending to limit the present invention thereto. Parts in Examples are parts by mass unless specified otherwise. Here, "ambient pressure" means 101.3 kPa, and "room temperature" means 25°C.

[Confirmation of Crystal Structure in Cellulose and the Like]

The crystal structures of the cellulose raw materials and the modified cellulose are confirmed by measuring with a diffractometer manufactured by Rigaku Corporation under the trade name of "Rigaku RINT 2500VC X-RAY diffractometer" under the following conditions.

Conditions for preparing measurement pellets: A pressure in the range of from 10 to 20 MPa is applied with a tablet molding machine, to prepare smooth pellets having an area 320 $mm^2$ × a thickness 1 mm.

Conditions for X-Ray Diffraction Analysis: a step angle of 0.01°, a scanning speed of 10°/min, and a measurement range: an angle of diffraction $2\theta$ = 5-45° X-Ray Source: Cu/K$\alpha$-Radiation, tube voltage: 40 kv, tube current: 120 mA Peak Splitting Conditions: After the background noise is removed, a peak is fit with a Gaussian function so that a difference in errors between $2\theta$ = 13-23° falls within 5%.

The crystallinity of cellulose I crystal structure is calculated using areas of X-ray diffraction peaks obtained by the above peak splitting on the basis of the following formula (A).

$$\text{Cellulose I Crystallinity (\%)} = [Icr/(Icr + Iam)] \times 100 \qquad (A)$$

wherein Icr is an area of diffraction peaks of a lattice face (002 face) (angle of diffraction $2\theta$ = 22-23°), and lam is an area of diffraction peaks of an amorphous portion (angle of diffraction $2\theta$ = 18.5°), in X-ray diffraction.

[Measurements of Molar Substitution (MS)]

The % content (% by mass) of the substituent contained in the cellulose to be measured is calculated in accordance with Zeisel method, which is known as a method of analyzing an average number of moles added of alkoxy groups of the cellulose ethers described in Analytical Chemistry, 51(13), 2172 (1979), "Fifteenth Revised Japan Pharmacopeia (Section of Method of Analyzing Hydroxypropyl Cellulose)" or the like. The procedures are shown hereinbelow.

(i) To a 200 mL volumetric flask is added 0.1 g of n-tetradecane, and filled up to a marked line with hexane, to provide an internal standard solution.
(ii) Seventy milligrams of cellulose to be measured that are previously purified and dried, and 80 mg of adipic acid are accurately weighed in a 10 mL vial jar, 2 mL of hydroiodic acid is added thereto, and the vial jar is tightly sealed.
(iii) The mixture in the above vial jar is heated with a block heater at 160°C for 1 hour, while stirring with stirrer chips.
(iv) After heating, 2 mL of the internal standard solution and 2 mL of diethyl ether are sequentially injected to the vial, and a liquid mixture is stirred at room temperature for 1 minute.
(v) An upper layer (diethyl ether layer) of the mixture separated in two layers in the vial jar is analyzed by gas chromatography with one manufactured by SHIMADZU Corporation under the trade name of "GC2010Plus."
(vi) The analyses are carried out in the same manner as in (ii) to (v) except that the cellulose to be measured is changed to 5 mg, 10 mg, and 15 mg, respectively, of an etherification agent used in the modification, to draw a calibration curve of the etherification agent.
(vii) From the drawn calibration curve and the analytical results of the cellulose to be measured, the substituents contained in the cellulose to be measured are quantified. The analytical conditions are as follows.

Column: manufactured by Agilent Technologies, under the trade name of DB-5, 12 m, 0.2 mm × 0.33 μm

Column Temperature: 30°C (holding for 10 min),
→ at 10°C/min,

(continued)

| | |
|---|---|
| | → 300°C (holding for 10 min) |
| Injector Temperature: | 300°C |
| Detector Temperature: | 300°C |
| Injection Amount: | 1 μL |

From the content of the substituents obtained, the molar substitution (MS), which is a molar amount of substituents based on one mol of the anhydrous glucose unit, is calculated using the following mathematical formula (1).

Math Formula (1):

$$MS = (W/Mw)/((100-W)/162.14)$$

W: The content of the substituent introduced in the step A or the step B in the cellulose to be measured, % by mass
Mw: The molecular weight of the etherification agent introduced in the introducing step, g/mol
In addition, in a case where two kinds of substituents A and B are introduced in a single step, and each of the MS is collectively calculated, each of the molar substitutions can be calculated using the following math formulas (2) and (3).

Math Formula (2):

$$MS(A) = (A/Mw)/((100 - A - B)/162.14)$$

Math Formula (3):

$$MS(B) = (B/Mw)/((100 - A - B)/162.14)$$

wherein A: The content of the substituent A when two kinds of substituents A and B are introduced to a cellulose to be measured in a single step, % by mass B: The content of the substituent B when two kinds of substituents A and B are introduced to a cellulose to be measured in a single step, % by mass
Mw: The molecular weight of the etherification agent introduced in the introducing step, g/mol

[Average Fiber Diameter and Average Fiber Length of Cellulose Raw Materials and Modified Cellulose]

A medium is added to cellulose to be measured, to provide a dispersion, a content of which is 0.01% by mass. The dispersion is measured with a wet-dispersion type image analysis particle counter manufactured by JASCO International Co., Ltd. under the trade name of IF-3200, under the conditions of a front lens: 2 folds, telecentric zoom lens: 1 fold, image resolution:
0.835 μm/pixel, syringe inner diameter: 6,515 μm, spacer thickness: 500 μm, image recognition mode: ghost, threshold: 8, amount of analytical sample: 1 mL, and sampling: 15%. One hundred or more strands of cellulose are measured, an average ISO fiber diameter thereof is calculated as an average fiber diameter, and an average ISO fiber length is calculated as an average fiber length.

Production Example of Cellulose Raw Materials 1 < NBKP Pulverized Product >

A powder-form cellulose prepared by pulverizing needle-leaf bleach kraft pulp (hereinafter abbreviated as NBKP, "Hinton," manufactured by West Fraser, in a fibrous form, having an average fiber diameter of 24 μm, a cellulose content of 90% by mass, and a water content of 5% by mass, the powder-form cellulose having an average median diameter of 89 μm, a cellulose content of 90% by mass, and a water content of 5% by mass) was used as cellulose raw materials 1.

Production Example of Cellulose Raw Materials 2 < Butylene Oxide-Introduced Cellulose >

To 250.0 g of an absolutely dried, pulverized product of NBKP (Cellulose Raw Materials 1) was added 267.1 g of a 6.4% by mass aqueous sodium hydroxide solution, 0.28 equivalents of NaOH per AGU, and homogeneously mixed. Thereafter, 333.8 g of butylene oxide manufactured by Wako Pure Chemical Industries, Ltd., 3 equivalents per AGU, was added thereto as an etherification agent. The system was tightly closed, and the reaction was then carried out under stirring at 50°C for 7 hours with a kneader-rotor. After the reaction, the reaction mixture was neutralized with acetic acid, and sufficiently washed with water and acetone, respectively, to remove impurities, and the washed mixture was vacuum-dried overnight at 70°C, to provide cellulose raw materials 2 (MS of butylene oxide: 0.26).

Example 1

To 1.0 g of the cellulose raw materials 1 were added 10.7 g of a 6.4% by mass aqueous sodium hydroxide solution, 2.77 equivalents of NaOH per AGU, and 0.069 g of dodecyltrimethylammonium chloride manufactured by FUJIFILM Wako Chemical Corporation, 0.04 equivalents per AGU, as a surfactant, and the mixture was homogeneously mixed. Thereafter, 5.18 g of 2-ethylhexyl glycidyl ether manufactured by Tokyo Chemical Industry Co., Ltd., 4.5 equivalents per AGU, was added thereto as an etherification agent, and the system was tightly closed, and the reaction was carried out under stirring with a block heater at 70°C for 24 hours. After the reaction, the reaction mixture was washed with a heated IPA, and then neutralized with acetic acid, and sufficiently washed with water and acetone, respectively, to remove impurities, and the washed mixture was vacuum-dried overnight at 70°C, to provide modified cellulose fibers having a cellulose I crystal structure.

Examples 2 and 3

The same procedures as in Example 1 were carried out except in the point that 2-ethylhexyl glycidyl ether was changed to lauryl glycidyl ether manufactured by Yokkaichi Chemical Company Limited, Example 2, or to stearyl glycidyl ether manufactured by Kao Corporation, Example 3, to provide each of modified cellulose fibers having a cellulose I crystal structure. The amount of the surfactant was adjusted to 4.5 equivalents per AGU.

Example 4

The same procedures as in Example 2 were carried out except in the point that the amount of lauryl glycidyl ether used was changed to 1.0 equivalent per AGU, to provide modified cellulose fibers having a cellulose I crystal structure.

Comparative Examples 1 to 4

The same procedures as in Examples 1 to 4 were carried out except in the point that the surfactant was changed to no addition and equivalents, to provide each of modified cellulose fibers having a cellulose I crystal structure.

Examples 5 to 7 and 9 to 12

The same procedures as in Example 4 were carried out except in the point that a surfactant used was changed to one listed in Table 4, to provide each of modified cellulose fibers having a cellulose I crystal structure. The amount of the surfactant was adjusted to 1.0 equivalent per AGU.

Example 8

To 1.0 g of the cellulose raw materials 1 were added 13.3 g of a 25% by mass aqueous TBAH solution manufactured by Combi-Blocks, 2.17 equivalents of TBAH per AGU, and 0.069 g of dodecyltrimethylammonium chloride manufactured by FUJIFILM Wako Chemical Corporation, 0.04 equivalents per AGU, as a surfactant, and the mixture was homogeneously mixed. Thereafter, 2.9 g of lauryl glycidyl ether manufactured by Yokkaichi Chemical Company Limited, 1.0 equivalent per AGU, was added as an etherification agent, and the system was tightly closed, and the reaction was carried out under stirring with a block heater at 70°C for 24 hours. After the reaction, the reaction mixture was washed with a heated IPA, and then neutralized with acetic acid, and sufficiently washed with water and acetone, respectively, to remove impurities, and the washed mixture was vacuum-dried overnight at 70°C, to provide modified cellulose fibers having a cellulose I crystal structure.

Examples 13 and 14

The same procedures as in Example 1 were carried out except in the point that 2-ethylhexyl glycidyl ether was changed to phenyl glycidyl ether manufactured by Tokyo Chemical Industry Co., Ltd., 1.0 equivalent per AGU in Example 13, or changed to o-methylphenyl glycidyl ether manufactured by Sigma-Aldrich, 1.0 equivalent per AGU in Example 14, to provide each of modified cellulose fibers having a cellulose I crystal structure.

Comparative Examples 5 and 6

The same procedures as in Examples 13 and 14 were carried out except in the point that the surfactant was changed to no addition, to provide each of modified cellulose fibers having a cellulose I crystal structure.

Example 15

To 1.0 g of the cellulose raw materials 2 were added 10.7 g of a 6.4% by mass aqueous sodium hydroxide solution, 3.00 equivalents of NaOH per AGU, and 0.063 g of dodecyltrimethylammonium chloride manufactured by FUJIFILM Wako Chemical Corporation, 0.04 equivalents per AGU, as a surfactant, and the mixture was homogeneously mixed. Thereafter, 1.38 g of lauryl glycidyl ether manufactured by Yokkaichi Chemical Company Limited, 1.0 equivalent per AGU, was added as an etherification agent, and the system was tightly closed, and the reaction was carried out under stirring with a block heater at 70°C for 24 hours. After the reaction, the reaction mixture was washed with a heated IPA, and then neutralized with acetic acid, and sufficiently washed with water and acetone, respectively, to remove impurities, and the washed mixture was vacuum-dried overnight at 70°C, to provide modified cellulose fibers having a cellulose I crystal structure.

Comparative Example 7

The same procedures as in Example 15 were carried out except in the point that the surfactant was changed to no addition, to provide modified cellulose fibers having a cellulose I crystal structure.

Example 16

The same procedures as in Example 15 were carried out except in the point that lauryl glycidyl ether was changed to stearyl glycidyl ether manufactured by Kao Corporation, to provide modified cellulose fibers having a cellulose I crystal structure.

Examples 17 to 21

The same procedures as in Example 15 were carried out except in the point that a surfactant used was changed to one listed in Table 7, to provide each of modified cellulose fibers having a cellulose I crystal structure.

In addition to those clearly shown above, the details of the surfactants used in each of Examples will be shown hereinbelow. Here, the amount of each component described in Examples and Comparative Examples is an amount of the effective component.

Octyltrimethylammonium chloride manufactured by Tokyo Chemical Industry Co., Ltd.
QUARTAMIN D-10P, manufactured by Kao Corporation, didecyldimethylammonium chloride
Stearyl trimethylammonium chloride, manufactured by Combi-Blocks NEOPELEX G-15, manufactured by Kao Corporation, sodium dodecylbenzenesulfonate
PELEX TR, manufactured by Kao Corporation, sodium dialkylsulfosuccinate EMULGEN 102KG manufactured by Kao Corporation, polyoxyethylene lauryl ether
LATEMUL E-150 manufactured by Kao Corporation, sodium polyoxyethylene lauryl ether sulfate
EMULGEN 150 manufactured by Kao Corporation, polyoxyethylene lauryl ether
AMPHITOL 20AB manufactured by Kao Corporation, lauramidopropyl betaine

The modified cellulose fibers of each of Examples and Comparative Examples have a substituent represented by the following general formula (3a):

$$-CH_2-CH(OH)-CH_2-O-R^3 \qquad (3a)$$

The details for $R^3$ are shown in Tables 1 to 7.

Reaction Selectivity Rate (Relative Value)

The reaction selectivity rate is a value obtained by dividing the number of moles of the substituent having 6 or more carbon atoms added per one glucose unit by the used molar amount of an etherification agent each used. The reaction selectivity rates for Examples 1 to 3 were each a relative value based on each of Comparative Examples 1 to 3 as being defined as 1; the reaction selectivity rates for Examples 4 to 12 were each a relative value based on Comparative Example 4; the reaction selectivity rate for Example 13 was a relative value based on Comparative Example 6; the reaction selectivity rate for Example 14 was a relative value based on Comparative Example 7; and the reaction selectivity rates for Examples 15 to 21 were each a relative value based on Comparative Example 8, and each of the reaction selectivity rates is together shown with the relative value.

[Table 1]

Table 1

| | Comp. Ex. 1 | Ex. 1 |
|---|---|---|
| Cellulose raw materials | Cellulose raw materials 1 | |
| Etherification agent | 2-Ethylhexyl glycidyl ether | |
| Amount of etherification agent used, equivalents per AGU | 4.5 | |
| Base | NaOH | |
| Amount of base used, equivalents per AGU | 2.77 | |
| Surfactant | - | Dodecyltrimethylammonium chloride |
| HLB value | - | 4.0 |
| Number of carbon atoms of long-chain alkyl of the surfactant | - | 12 |
| Amount of surfactant used, equivalents per AGU | - | 0.04 |
| Structure of $R^3$ in substituent | -C8H17 | |
| Total number of carbon atoms of substituent | 11 | |
| Molar substitution (MS), equivalents per AGU | 0.0019 | 0.64 |
| Reaction selectivity rate, % | 0.04 | 14.22 |
| Reaction selectivity rate, relative value | 1 | 355 |
| Comparative example to be compared in the reaction selectivity rate | - | Comp. Ex. 1 |

[Table 2]

Table 2

| | Comp. Ex. 2 | Ex. 2 |
|---|---|---|
| Cellulose raw materials | Cellulose raw materials 1 | |
| Etherification agent | Lauryl glycidyl ether | |
| Amount of etherification agent used, equivalents per AGU | 4.5 | |
| Base | NaOH | |
| Amount of base used, equivalents per AGU | 2.77 | |

(continued)

| | Comp. Ex. 2 | Ex. 2 |
|---|---|---|
| Surfactant | - | Dodecyltrimethylammonium chloride |
| HLB value | - | 4.0 |
| Number of carbon atoms of long-chain alkyl of the surfactant | - | 12 |
| Amount of surfactant used, equivalents per AGU | - | 0.04 |
| Structure of $R^3$ in substituent | -C12H25 | |
| Total number of carbon atoms of substituent | 15 | |
| Molar substitution (MS), equivalents per AGU | 0.0004 | 1.13 |
| Reaction selectivity rate, % | 0.01 | 25.11 |
| Reaction selectivity rate, relative value | 1 | 3062 |
| Comparative example to be compared in the reaction selectivity rate | | Comp. Ex. 2 |

[Table 3]

Table 3

| | Comp. Ex. 3 | Ex. 3 |
|---|---|---|
| Cellulose raw materials | Cellulose raw materials 1 | |
| Etherification agent | Stearyl glycidyl ether | |
| Amount of etherification agent used, equivalents per AGU | 4.5 | |
| Base | NaOH | |
| Amount of base used, equivalents per AGU | 2.77 | |
| Surfactant | - | Dodecyltrimethylammonium chloride |
| HLB value | - | 4.0 |
| Number of carbon atoms of long-chain alkyl of the surfactant | - | 12 |
| Amount of surfactant used, equivalents per AGU | - | 0.04 |
| Structure of $R^3$ in substituent | -C18H37 | |
| Total number of carbon atoms of substituent | 21 | |
| Molar substitution (MS), equivalents per AGU | 0.0001 | 0.29 |
| Reaction selectivity rate, % | 0.002 | 6.44 |
| Reaction selectivity rate, relative value | 1 | 2900 |
| Comparative example to be compared in the reaction selectivity rate | - | Comp. Ex. 3 |

[Table 4]

Table 4

| | Comp. Ex. 4 | Ex. 4 | Ex. 5 | Ex. 6 | Ex. 7 | Ex. 8 |
|---|---|---|---|---|---|---|
| Cellulose raw materials | Cellulose raw materials 1 | | | | | |
| Etherification agent | Lauryl glycidyl ether | | | | | |
| Amount of etherification agent used, equivalents per AGU | 1.0 | | | | | |
| Base | NaOH | NaOH | NaOH | NaOH | NaOH | TBAH |
| Amount of base used, equivalents per AGU | 2.77 | 2.77 | 2.77 | 2.77 | 2.77 | 2.17 |
| Surfactant | – | Dodecyl-trimethyl-ammonium chloride | Octyl-trimethyl-ammonium chloride | Didecyl-dimethyl-ammonium chloride | Stearyl-trimethyl-ammonium chloride | Dodecyl-trimethyl-ammonium chloride |
| HLB value | – | 4.0 | 6.0 | 3.1 | 2.0 | 4.0 |
| Number of carbon atoms of long-chain alkyl of surfactant | – | 12 | 8 | 10 | 18 | 12 |
| Amount of surfactant used, equivalents per AGU | – | 0.04 | 0.04 | 0.04 | 0.04 | 0.04 |
| Structure of $R^3$ in substituent | -C12H25 | | | | | |
| Total number of carbon atoms of substituent | 15 | | | | | |
| Molar substitution (MS), equivalents per AGU | 0.0005 | 0.58 | 0.01 | 0.28 | 0.17 | 0.42 |
| Reaction selectivity rate, % | 0.05 | 58.00 | 1.00 | 28.00 | 17.00 | 42.00 |
| Reaction selectivity rate, relative value | 1 | 1160 | 20 | 560 | 340 | 840 |
| Comparative example to be compared in the reaction selectivity rate | – | Comp. Ex. 4 | | | | |

- continued -

- Continued -

| | Comp. Ex. 4 | Ex. 9 | Ex. 10 | Ex. 11 | Ex. 12 |
|---|---|---|---|---|---|
| Cellulose raw materials | Cellulose raw materials 1 | | | | |
| Etherification agent | Lauryl glycidyl ether | | | | |
| Amount of etherification agent used, equivalents per AGU | 1.0 | | | | |
| Base | NaOH | NaOH | NaOH | NaOH | NaOH |
| Amount of base used, equivalents per AGU | 2.77 | 2.77 | 2.77 | 2.77 | 2.77 |
| Surfactant | – | NEOPELEX G-15 (Anionic) | PELEX TR (Anionic) | EMULGEN 102KG (Nonionic) | AMPHITOL-20AB (Amphoteric ion) |
| HLB value | – | 2.6 | 4.1 | 3.7 | 4.4 |
| Number of carbon atoms of long-chain alkyl of surfactant | – | 18 | 13 | 12 | 12 |
| Amount of surfactant used, equivalents per AGU | – | 0.04 | 0.04 | 0.04 | 0.04 |
| Structure of $R^3$ in substituent | -C12H25 | | | | |
| Total number of carbon atoms of substituent | 15 | | | | |
| Molar substitution (MS), equivalents per AGU | 0.0005 | 0.0019 | 0.0013 | 0.0009 | 0.0019 |
| Reaction selectivity rate, % | 0.05 | 0.19 | 0.13 | 0.09 | 0.19 |
| Reaction selectivity rate, relative value | 1 | 4 | 3 | 2 | 4 |
| Comparative example to be compared in the reaction selectivity rate | – | Comp. Ex. 4 | | | |

[Table 5]

Table 5

| | Comp. Ex. 5 | Ex. 13 |
|---|---|---|
| Cellulose raw materials | Cellulose raw materials 1 | |
| Etherification agent | Phenyl glycidyl ether | |
| Amount of etherification agent used, equivalents per AGU | 1 | |
| Base | NaOH | |
| Amount of base used, equivalents per AGU | 2.77 | |

(continued)

| | Comp. Ex. 5 | Ex. 13 |
|---|---|---|
| Surfactant | - | Dodecyltrimethylammonium chloride |
| HLB value | - | 4.0 |
| Number of carbon atoms of long-chain alkyl of the surfactant | - | 12 |
| Amount of surfactant used, equivalents per AGU | - | 0.04 |
| Structure of $R^3$ in substituent | -C6H6 | |
| Total number of carbon atoms of substituent | 9 | |
| Molar substitution (MS), equivalents per AGU | 0.03 | 0.18 |
| Reaction selectivity rate, % | 3 | 18 |
| Reaction selectivity rate, relative value | 1 | 6 |
| Comparative example to be compared in the reaction selectivity rate | - | Comp. Ex. 5 |

[Table 6]

Table 6

| | Comp. Ex. 6 | Ex. 14 |
|---|---|---|
| Cellulose raw materials | Cellulose raw materials 1 | |
| Etherification agent | o-Methylphenyl glycidyl ether | |
| Amount of etherification agent used, equivalents per AGU | 1 | |
| Base | NaOH | |
| Amount of base used, equivalents per AGU | 2.77 | |
| Surfactant | - | Dodecyltrimethylammonium chloride |
| HLB value | - | 4.0 |
| Number of carbon atoms of long-chain alkyl of the surfactant | - | 12 |
| Amount of surfactant used, equivalents per AGU | - | 0.04 |
| Structure of $R^3$ in substituent | -C7H9 | |
| Total number of carbon atoms of substituent | 10 | |
| Molar substitution (MS), equivalents per AGU | 0.02 | 0.17 |
| Reaction selectivity rate, % | 2 | 17 |
| Reaction selectivity rate, relative value | 1 | 9 |
| Comparative example to be compared in the reaction selectivity rate | - | Comp. Ex. 6 |

[Table 7]

Table 7

| | Comp. Ex. 7 | Ex. 15 | Ex. 16 | Ex. 17 | Ex. 18 |
|---|---|---|---|---|---|
| Cellulose raw materials | Cellulose raw materials 2 | | | | |
| Etherification agent | Lauryl glycidyl ether | Lauryl glycidyl ether | Stearyl glycidyl ether | Lauryl glycidyl ether | Lauryl glycidyl ether |
| Amount of etherification agent used, equivalents per AGU | 1.0 | | | | |
| Base | NaOH | | | | |
| Amount of base used, equivalents per AGU | 3.00 | | | | |
| Surfactant | – | Dodecyl-trimethyl-ammonium chloride | Dodecyl-trimethyl-ammonium chloride | Octyl-trimethyl-ammonium chloride | Stearyl-trimethyl-ammonium chloride |
| HLB value | – | 4.0 | 4.0 | 6.0 | 2.0 |
| Number of carbon atoms of long-chain alkyl of surfactant | – | 12 | 12 | 8 | 18 |
| Amount of surfactant used, equivalents per AGU | – | 0.04 | 0.04 | 0.04 | 0.04 |
| Structure of $R^3$ in substituent | -C12H25 | -C12H25 | -C18H37 | -C12H25 | -C12H25 |
| Total number of carbon atoms of substituent | 15 | 15 | 21 | 15 | 15 |
| Molar substitution (MS), equivalents per AGU | 0.35 | 0.57 | 0.53 | 0.48 | 0.5 |
| Reaction selectivity rate, % | 35 | 57 | 53 | 48 | 50 |
| Reaction selectivity rate, relative value | 1 | 1.6 | 1.5 | 1.4 | 1.4 |
| Comparative example to be compared in the reaction selectivity rate | – | Comp. Ex. 7 | | | |

- continued -

- Continued -

| | Comp. Ex. 7 | Ex. 19 | Ex. 20 | Ex. 21 |
|---|---|---|---|---|
| Cellulose raw materials | Cellulose raw materials 2 | | | |
| Etherification agent | Lauryl glycidyl ether | Lauryl glycidyl ether | Lauryl glycidyl ether | Lauryl glycidyl ether |
| Amount of etherification agent used, equivalents per AGU | 1.0 | | | |
| Base | NaOH | | | |
| Amount of base used, equivalents per AGU | 3.00 | | | |
| Surfactant | – | LATEMUL E-150 (Anionic) | EMULGEN 150 (Nonionic) | AMPHITOL 20AB (Amphoteric ion) |
| HLB value | – | 4.5 | 3.7 | 4.4 |
| Number of carbon atoms of long-chain alkyl of surfactant | – | 12 | 12 | 12 |
| Amount of surfactant used, equivalents per AGU | – | 0.04 | 0.04 | 0.04 |
| Structure of $R^3$ in substituent | $-C_{12}H_{25}$ | $-C_{12}H_{25}$ | $-C_{12}H_{25}$ | $-C_{12}H_{25}$ |
| Total number of carbon atoms of substituent | 15 | 15 | 15 | 15 |
| Molar substitution (MS), equivalents per AGU | 0.35 | 0.58 | 0.56 | 0.37 |
| Reaction selectivity rate, % | 35 | 58 | 56 | 37 |
| Reaction selectivity rate, relative value | 1 | 1.7 | 2.0 | 1.1 |
| Comparative example to be compared in the reaction selectivity rate | – | Comp. Ex. 7 | | |

As shown in Tables 1 to 7, it can be seen that the reaction selectivity rate of each of Examples using a surfactant is more excellent than a reaction selectivity rate of each of Comparative Examples without using a surfactant in both cases where the NBKP pulverized product was used as raw materials (Cellulose Raw Materials 1) and where a cellulose added with butylene oxide by the step B was used as cellulose raw materials (Cellulose Raw Materials 2). In addition, from the comparisons of Examples 4 to 8 with Examples 9 to 12, it can be seen that in cases where the NBKP pulverized products were used as raw materials, the reaction selectivity rate was particularly excellent when a cationic surfactant was used.

## INDUSTRIAL APPLICABILITY

Since the molded article obtained by formation of a composite of the modified cellulose fibers obtained by the method for production of the present invention and a resin has both high mechanical strength and toughness, the molded article can be suitably used in various industrial applications such as daily sundries, household electric appliance parts, packaging materials for household electric appliances, and automobile parts.

**Claims**

1. A method for producing a modified cellulose comprising the following step A: step A: introducing a cellulose raw material with a substituent having 6 or more carbon atoms to a group in which a hydrogen atom is removed from a hydroxyl group of a cellulose backbone, in the presence of water and a surfactant.

2. The method for production according to claim 1, wherein the surfactant is a surfactant with a hydrocarbon group having 6 or more carbon atoms and 40 or less carbon atoms.

3. The method for production according to claim 1 or 2, wherein the surfactant is a cationic surfactant.

4. The method for production according to any one of claims 1 to 3, wherein the surfactant is a quaternary ammonium salt.

5. The method for producing a modified cellulose according to any one of claims 1 to 4, wherein the substituent having 6 or more carbon atoms comprises one or more substituents selected from the group consisting of the following general formulas (1), (2), and (3):

$$-R^1 \qquad (1)$$

$$-CH_2-CH(OH)-R^2 \qquad (2)$$

$$-CH_2-CH(OH)-CH_2-(OA)_n-O-R^3 \qquad (3)$$

wherein $R^1$ is a hydrocarbon group having 6 or more carbon atoms and 30 or less carbon atoms; $R^2$ is a hydrocarbon group having 4 or more carbon atoms and 30 or less carbon atoms; $R^3$ is a hydrocarbon group having 3 or more carbon atoms and 30 or less carbon atoms; n is the number of 0 or more and 50 or less; and A is a linear or branched divalent hydrocarbon group having 2 or more carbon atoms and 6 or less carbon atoms.

6. The method for production according to any one of claims 1 to 5, wherein the modified cellulose has a cellulose I crystal structure.

7. The method for production according to any one of claims 1 to 6, wherein the modified cellulose is modified cellulose fibers.

8. The method for production according to any one of claims 1 to 7, further comprising the following step B: step B: introducing a cellulose raw material with a substituent having 1 or more carbon atoms and 5 or less carbon atoms to a group in which a hydrogen atom is removed from a hydroxyl group of a cellulose backbone in the presence of water and a surfactant.

9. The method for production according to claim 8, wherein the substituent having 1 or more carbon atoms and 5 or less carbon atoms is one or more substituents selected from the group consisting of the following general formulas (4), (5) and (6):

$$-R^4 \qquad (4)$$

$$-CH_2-CH(OH)-R^5 \qquad (5)$$

$$-CH_2-CH(OH)-CH_2-(OA)_n-O-R^6 \qquad (6)$$

wherein $R^4$ is a hydrocarbon group having 1 or more carbon atoms and 5 or less carbon atoms; $R^5$ is hydrogen, or a hydrocarbon group having 1 or more carbon atoms and 3 or less carbon atoms; $R^6$ is hydrogen, or a hydrocarbon group having 1 or more carbon atoms and 2 or less carbon atoms; n is the number of 0 or more and 2 or less; and A is a divalent hydrocarbon group having 2 or more carbon atoms and 6 or less carbon atoms.

10. The method for production according to claim 8 or 9, wherein the step A and the step B are carried out concurrently.

11. The method for production according to claim 8 or 9, wherein the step A is carried out after the step B, wherein the cellulose introduced with a substituent having 1 or more carbon atoms and 5 or less carbon atoms obtained in the

step B is used as a cellulose raw material in the step A.

**12.** A modified cellulose obtained by a method for producing a modified cellulose comprising the following step A:
step A: introducing a cellulose raw material with a substituent having 6 or more carbon atoms to a group in which a hydrogen atom is removed from a hydroxyl group of a cellulose backbone, in the presence of water and a surfactant.

**13.** The modified cellulose according to claim 12, wherein the surfactant is a surfactant with a hydrocarbon group having 6 or more carbon atoms and 40 or less carbon atoms.

**14.** A resin composition containing a modified cellulose obtained by a method for production as defined in any one of claims 1 to 11 and a resin, wherein the modified cellulose is mixed with a resin.

**15.** A molded article obtained by molding a resin composition as defined in claim 14.

## INTERNATIONAL SEARCH REPORT

International application No.
PCT/JP2020/021122

A. CLASSIFICATION OF SUBJECT MATTER
Int.Cl. C08B11/00(2006.01)i, C08B11/02(2006.01)i, C08B11/08(2006.01)i, C08B11/193(2006.01)i, D01F2/28(2006.01)i
FI: C08B11/00, C08B11/02, C08B11/08, C08B11/193, D01F2/28Z
According to International Patent Classification (IPC) or to both national classification and IPC

B. FIELDS SEARCHED
Minimum documentation searched (classification system followed by classification symbols)
Int.Cl. C08B11/00, C08B11/02, C08B11/08, C08B11/193, D01F2/28

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2017-053077 A (KAO CORPORATION) 16.03.2017 (2017-03-16), claims, example 16 | 1-15<br>1-15 |
| X<br>Y | WO 2017/043450 A1 (KAO CORPORATION) 16.03.2017 (2017-03-16), claims, examples 8, 9 | 1-15<br>1-15 |
| X<br>Y | WO 2017/043451 A1 (KAO CORPORATION) 16.03.2017 (2017-03-16), claims, examples 8, 9 | 1-15<br>1-15 |
| X<br>Y | JP 2018-145428 A (KAO CORPORATION) 20.09.2018 (2018-09-20), claims, examples | 12-15<br>1-15 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16.06.2020 | 07.07.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/021122

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2018-145571 A (KAO CORPORATION) 20.09.2018 (2018-09-20), paragraphs [0023]-[0026], [0139]-[0144] | 12-15<br>1-15 |
| Y | JP 2003-530466 A (CLARIANT GMBH) 14.10.2003 (2003-10-14), claim 1, whole specification, examples | 1-15 |
| Y | JP 2008-266625 A (SANYO CHEMICAL IND LTD.) 06.11.2008 (2008-11-06), claims 1-5, examples 1-5 | 1-15 |
| Y | JP 2006-233144 A (SANYO CHEMICAL IND LTD.) 07.09.2006 (2006-09-07), claim 1, paragraph [0019], example 8 | 1-15 |
| Y | JP 03-279471 A (TOYOBO CO., LTD.) 10.12.1991 (1991-12-10), claim 1, examples 1, 2 | 1-15 |
| Y | JP 01-085201 A (THE DOW CHEMICAL COMPANY) 30.03.1989 (1989-03-30), examples | 1-15 |
| Y | JP 59-075902 A (DAICEL CHEM IND LTD.) 28.04.1984 (1984-04-28), claims, detailed description of the invention, examples 1-11 | 1-15 |
| Y | HEINZE, T. et al., Effective preparation of cellulose derivatives in a new simple cellulose solvent, Macromol. Chem. Phys., 2000, vol. 201, no. 6, pp. 627-631, abstract, p. 630, left column, ll. 11-21, etc. | 1-15 |

Form PCT/ISA/210 (second sheet) (January 2015)

**INTERNATIONAL SEARCH REPORT**
Information on patent family members

International application No.
PCT/JP2020/021122

| | | |
|---|---|---|
| JP 2017-053077 A | 16.03.2017 | US 2019/0169314 A1<br>claims 1-20, example 16<br>WO 2017/043454 A1<br>EP 3348581 A1<br>CN 107949577 A<br>WO 2017/043450 A1<br>WO 2017/043451 A1<br>WO 2017/043452 A1<br>WO 2017/043453 A1 |
| WO 2017/043450 A1 | 16.03.2017 | US 2019/0185587 A1<br>claims, examples 8, 9<br>JP 2017-053077 A<br>JP 2017-052939 A<br>US 2019/0169314 A1<br>EP 3348579 A1<br>EP 3348581 A1<br>CN 108026183 A<br>CN 107949577 A |
| WO 2017/043451 A1 | 16.03.2017 | US 2019/0010253 A1<br>claims, examples 8, 9<br>JP 2017-053077 A<br>JP 2017-053076 A<br>US 2019/0169314 A1<br>EP 3348580 A1<br>EP 3348581 A1<br>CN 107949576 A<br>CN 107949577 A |
| JP 2018-145428 A | 20.09.2018 | EP 3594246 A1<br>claims, examples<br>WO 2018/164132 A1<br>WO 2018/164131 A1<br>EP 3594247 A1<br>TW 201837058 A<br>CN 110325552 A<br>CN 110337452 A<br>JP 2018-145427 A |
| JP 2018-145571 A | 20.09.2018 | (Family: none) |
| JP 2003-530466 A | 14.10.2003 | US 2004/0110942 A1<br>claim 1, examples<br>WO 2001/077183 A1<br>EP 1278779 A1 |
| JP 2008-266625 A | 06.11.2008 | (Family: none) |
| JP 2006-233144 A | 07.09.2006 | (Family: none) |

Form PCT/ISA/210 (patent family annex) (January 2015)

**INTERNATIONAL SEARCH REPORT**
Information on patent family members

International application No.
PCT/JP2020/021122

| | | |
|---|---|---|
| JP 03-279471 A | 10.12.1991 | (Family: none) |
| JP 01-085201 A | 30.03.1989 | US 4845206 A<br>examples<br>EP 0292242 A2 |
| JP 59-075902 A | 28.04.1984 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017053077 A
- JP 2008266625 A


### Non-patent literature cited in the description


- Analytical Chemistry. *Fifteenth Revised Japan Pharmacopeia (Section of Method of Analyzing Hydroxypropyl Cellulose),* 1979, vol. 51 (13), 2172